# EUROPEAN PATENT APPLICATION

(11) **EP 1 052 567 A1**
(43) Date of publication of application: **15.11.2000**
(21) Application number: 00110053.6
(22) Date of filing: 12.05.2000
(51) Int. Cl.: G06F 7/50, G06F 7/544

(54) **Accumulator saturation predictor**

(30) Priority: 13.05.1999 JP 13314899
(71) Applicant: NEC CORPORATION, Tokyo (JP)
(72) Inventor: Nara, Masatohsi, Minato-ku, Tokyo (JP)
(74) Representative: von Samson-Himmelstjerna, Friedrich R., Dipl.-Phys.

(57) **Abstract**

A multiplier repeats an addition or subtraction between a first bit string representative of a product of multiplication and a second bit string representative of an addend or a subtrahend, wherein a saturation look-ahead circuit (20) checks predetermined high-order bits of the second bit string and bits at predetermined positions of a third bit string representative of the sum or the difference so as to predict saturated state in the accumulator (15), and a multiplexer (16) selects a fixed value when the saturation-Lockheed circuit predicts the saturated state, thereby accelerating the calculation.

## Description

### FIELD OF THE INVENTION

This invention relates to a multiplier and, more particularly, to a multiplier discriminating saturated state of an accumulator.

### DESCRIPTION OF THE RELATED ART

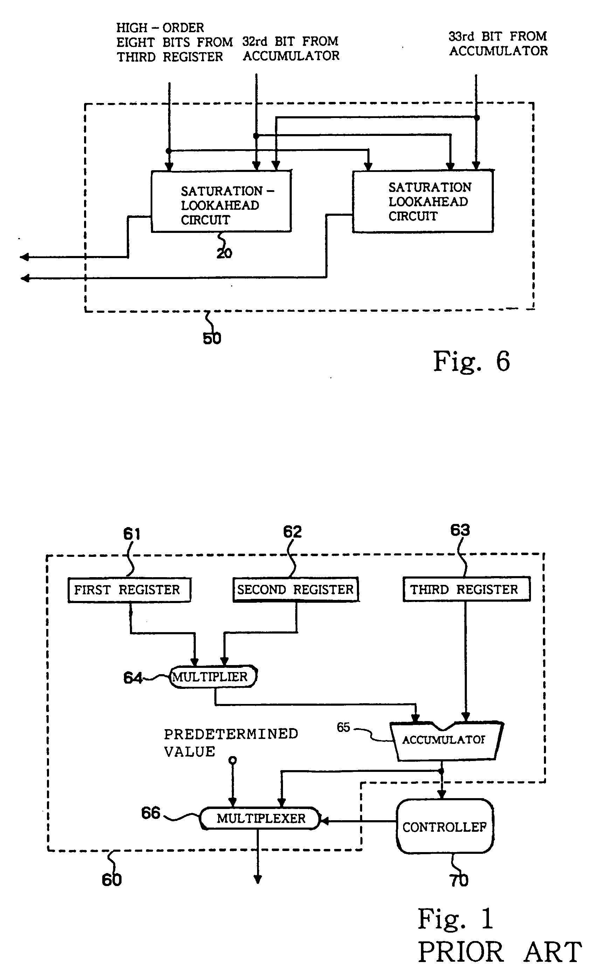

A typical example of the multiplier with a function against saturated state is illustrated in figure 1 of the drawings. The prior art multiplier comprises an accumulation/ multiplication circuit 60 and a controller 70 for the saturated state. The accumulation/ multiplication circuit 60 includes three registers 61/ 62/ 63, a multiplier 64, an accumulator 65 and a multiplexer 66.

A multiplier and a multiplicand are stored in the first register 61 and the second register 62, respectively, and an addend is stored in the third register 63. The first register 61 and the second register 62 are connected to the data input ports of the multiplier 64, and the multiplier 64 multiplies the multiplicand by the multiplier. The data output port of the multiplier 64 is connected to one of the data input ports of the accumulator 65, and the product is transferred to the data input port. The third register 63 is connected to the other data input port of the accumulator 65, and the addend is transferred to the other data input port. The accumulator 65 adds the addend to the product.

The data output port of the accumulator 65 is connected to one of the data input ports of the multiplexer 66 and the controller 70, and the sum is transferred to the controller 70 and the data input port of the multiplexer 66. The multiplexer 66 has other data input port, which is connected to a source of predetermined value.

The controller 70 compares the sum with the predetermined value to see whether or not the sum is greater than the predetermined value. In other words, the controller 70 checks the sum to see whether the accumulator 65 is saturated or not. If the answer is affirmative, the controller 70 instructs the multiplier 66 to output the predetermined value, and the predetermined value is output from the data output port of the multiplexer 66. On the other hand, when the sum is equal to or less than the predetermined value, the answer is given negative, and the controller 70 instructs the multiplexer 66 to output the sum from the data output port thereof.

A problem is encountered in the prior art multiplier in that a long time is consumed until the acknowledgement of the saturated state. This is because of the fact that the controller 70 determines the accumulator 65 to enter the saturated state after the calculation of the sum in the accumulator 65.

### SUMMARY OF THE INVENTION

It is therefore an important object of the present invention to provide a multiplier, which speeds up the discrimination of the saturated state.

In accordance with one aspect of the present invention, there is provided a calculation circuit for calculating a result comprising a calculating section having plural data input nodes and at least one data output node and carrying out a calculation on numbers at said plural data input ports for supplying a result to the data output port, a first source of number connected to the plural data input nodes for supplying the numbers to the plural data input nodes, a second source of number for producing a fixed number, a saturation- Lockheed circuit having data input ports respectively connected to the first source of number and the data output port of the calculating section, checking the result and at least one of the numbers to see whether or not saturated state is predicted in the calculating section and producing a control signal changed between a first state representative of the prediction of the saturated state and a second state representative of the prediction of the unsaturated state, and a multiplexing section having data input ports respectively connected to the second source of number and the data output port of the calculating section and responsive to the control signal so as to selectively connect the data output port and the second source of number to a data output port thereof.

### BRIEF DESCRIPTION OF THE DRAWINGS

The features and advantages of the multiplier will be more clearly understood from the following description taken in conjunction with the accompanying drawings in which:
Fig. 1 is a block diagram showing the circuit configuration of the prior art multiplier with the function against the saturated state;
Fig. 2 is a block diagram showing the circuit configuration of a multiplier with a predictive function against the saturated state according to the present invention;
Fig. 3 is a block diagram showing the circuit configuration of a saturation-Lockheed circuit incorporated in the multiplier;
Fig. 4 is a block diagram showing another saturation- Lockheed circuit incorporated in another multiplier according to the present invention;
Fig. 5 is a block diagram showing the circuit configuration of yet another multiplier according to the present invention; and
Fig. 6 is a block diagram showing the circuit configuration of a saturation-Lockheed circuit incorporated in the multiplier;

### DESCRIPTION OF THE PREFERRED EMBODIMENTS

### First Embodiment

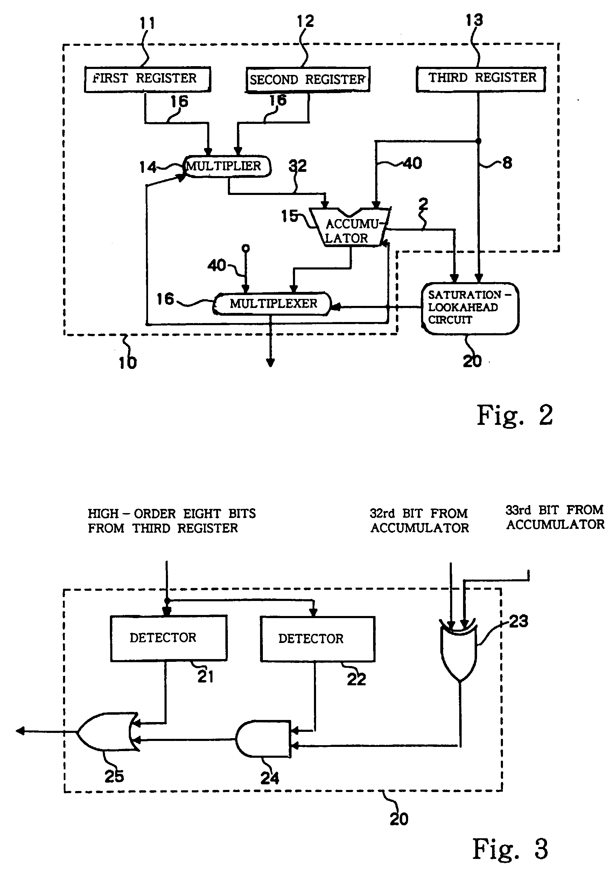

Referring to figure 2 of the drawings, a multiplier embodying the present invention largely comprises a multiplication/ accumulation circuit 10 and a saturation- Lockheed circuit 20. The multiplication/ accumulation circuit 10 repeats the multiplication and the addition, and calculates a sum. The saturation- Lockheed circuit 20 predicts the calculation result whether or not the sum/ difference is more than 007FFFFFFF. If more than 007FFFFFFF is predicted, the saturation- Lockheed circuit 20 instructs the multiplication/ accumulation circuit 10 to output 007FFFFFFF. Thus, the saturation- Lockheed circuit 20 predicts the sum/ difference prior to the completion of the calculation, and, accordingly, the data output is speed up.

The multiplication/ accumulation circuit 10 includes a first register 11, a second register 12, a third register 13, a multiplier 14, an accumulator 15, a multiplexer 16 and a source of fixed value 40. A multiplier and a multiplicand are respectively stored in the first register 11 and the second register 12, and the first register 11 and the second register 12 are connected to two data input ports of the multiplier 14. The multiplier 14 multiplies the multiplicand by the multiplier, and outputs the product from the data output port thereof. In this instance, the multiplier and the multiplicand are 16 bits long.

An addend/ subtrahend is stored in the third register 13, and is 40 bits long. The data output port of the multiplier 14 is connected to one of the data input ports of the accumulator 15, and the third register 13 is connected to the other data input port of the accumulator 15. The accumulator 15 adds the addend to the product, or subtracts the subtrahend from the product. Thus, the sum/ difference is output from the data output port of the accumulator 15.

The third register 13 and the accumulator 15 are further connected to the data input ports of the saturation- Lockheed circuit 20, and the output port of the saturation- Lockheed circuit 20 is connected to a control port of the multiplexer 16. The multiplexer 16 further has two data input ports and a data output port. The data input ports are connected to the data output port of the accumulator 15 and the source of fixed value 40. The source of fixed value 40 supplies 007FFFFFFF to the data input port of the multiplexer 16, and the accumulator 15 supplies the sum/ difference to the other data input port. The saturation- Lockheed circuit 20 changes the control signal between logic "1" level and logic "0" level depending upon the prediction. When the saturation-Lockheed circuit 20 predicts the sum/ difference greater than 007FFFFFFF, the saturation- Lockheed circuit 20 changes the control signal to logic "1" level. On the other hand, when the saturation- Lockheed circuit 20 predicts the sum/ difference equal to or less than 007FFFFFFF, the state look- ahead circuit 20 keeps the control signal in logic "0" level. The multiplexer 16 is responsive to the control signal so as to selectively connect the data input ports to the data output port.

Figure 3 illustrates the circuit configuration of the saturation- Lockheed circuit 20. The saturation- Lockheed circuit 20 includes detectors 21/ 22, an exclusive-OR gate 23, an AND gate 24 and an OR gate 25. The high- order eight bits of the addend/ subtrahend is transferred from the third resistor 13 to both detectors 21/ 22, and the thirty-second bit and the thirty-third bit of the sum/ difference are transferred from the accumulator 15 to input nodes of the exclusive-OR gate 23.

The detector 21 checks the sing bit in the given high- order eight bits to see whether the addend/ subtrahend is a positive number or a negative number. The detector 21 further checks the remaining high- order seven bits to see whether or not at least one bit is indicative of 1. If both answers are given affirmative, the detector 21 changes the output signal thereof to logic "1" level. If at least one answer is given negative, the detector 21 keeps the output signal in logic "0" level.

On the other hand, the detector 22 checks the high- order eight bits to see whether or not all the high-order bits are indicative of zero. When the answer is given affirmative, the detector 22 changes the output signal thereof to logic "1" level. However, if the answer is given negative, the detector 22 keeps the output signal in logic "0" level.

The thirty-second bit is exclusive-ORed with the thirty-third bit. The output node of the detector 22 and the output node of the exclusive-OR gate 23 are connected to the input nodes of the AND gate 24, and the output node of the AND gate 24 and the output node of the detector 21 are connected to the input nodes of the OR gate 25. The OR gate 25 changes the control signal between logic "1" level and logic "0" level.

The multiplier behaves as follows. The behavior of the multiplier 14 and the behavior of the accumulator 15 are described hereinbefore. The detector 21 changes the output signal thereof to logic "1" level under the conditions where the sign bit is indicative of a positive number and at least one high-order bit is indicative of 1. In this situation, the two high-order positions of the hexadecimal number or the addend are equal to or greater than 00, and the two high-order positions of the hexadecimal number may possibly make the sum greater than 007FFFFFFF. On the other hand, the detector 22 changes the output signal thereof to logic "1" under the conditions where all the high-order bits are zero.

When the thirty-second bit is different from the thirty-third bit, the exclusive- OR gate 23 changes the output signal thereof to logic "1". On the other hand, if the thirty- second bit is equal to the thirty- third bit, the exclusive-OR gate 23 keeps the output signal in logic "0" level.

The output signal of the detector 22 is ANDed with the output signal of the exclusive- OR gate 23. When the AND gate 24 changes the output signal thereof to logic "1" level, all the high- order bits are' indicative of zero, and the thirty-second bit is different from the thirty-third bit. The sum exceeds 007FFFFFFF, and the accumulator has been already saturated. The OR gate 25 changes the control signal to logic "1" level regardless of the output signal of the detector 21.

On the other hand, the AND gate 24 keeps the output signal in logic "0" level under two different conditions. The first condition is that, although all the high- order bits are indicative of zero, the thirty-second bit is identical with the thirty-third bit, i.e., both are zero or 1. The second condition is that at least one of the high- order eight bits is indicative of 1. In this situation, the addend may be causative of the saturation of the accumulator 15. However, the saturation is dependent on the value of the addend.

The OR gate 25 keeps the control signal in logic "0" level only when both of the AND gate 24 and the detector 21 keeps the output signals in logic "0" level. However, if at least one of the output signals is logic "1" level, the OR gate 25 changes the control signal to logic "1" level.

In detail, the OR gate 25 changes the control signal to logic "1" level under the conditions where all the high-order bits are indicative of zero and the thirty-second bit is different from the thirty-third bit. This condition is described hereinlater in detail. The OR gate 25 also changes the control signal to logic " 1" level under the conditions where the sing bit is indicative of a positive number and at least one of the remaining high- order seven bits is indicative of 1. The OR gate 25 keeps the control signal in logic "0" level under the conditions where the sign bit is representative of a positive number and any logic "1" bit is not contained in the remaining high- order seven bits.

When the sing bit is representative of a negative number and any logic "1" bit is not contained in the remaining high- order seven bits, all the high- order bits are indicative of zero, and the result of the AND operation is dependent on the combination of the thirty-second bit and the thirty-third bit. If the thirty-second bit is identical with the thirty- third bit, the exclusive-OR gate 23 keeps the output signal in logic "0" level, and the AND gate 24, and, accordingly, the OR gate 25 keeps the output signals in logic "0" level. However, if the thirty-second bit is different from the thirty-third bit, the AND gate 24 and, accordingly, the OR gate 25 changes the output signals to logic "1" level.

The multiplexer 16 differently behaves depending upon the logic level of the control signal. When the saturation- Lockheed circuit 20 changes the control signal to logic "1" level, the multiplexer 16 selects the source of fixed value 40, and delivers the output signal representative of 007FFFFFFF. The multiplication/ accumulation is brought to an end. If the saturation- Lockheed circuit 20 keeps the control signal in logic "0" level upon completion of the multiplication/ accumulation, the multiplexer 16 selects the data output port of the accumulator 15, and transfers the output signal of the accumulator 15 to the outside. If the stage- Lockheed circuit 20 changes the control signal to logic "1" level upon completion of the multiplication/ accumulation, the multiplexer 16 selects the source of fixed value, and delivers the output signal representative of 007FFFFFFF.

As will be understood from the foregoing description, the saturation-Lockheed circuit 20 predicts the saturation of the accumulator 15 on the basis of the high- order eight bits of the addend and the thirty-second/ thirty-third bits of the sum presently stored in the accumulator 15. When the saturated state is predicted, the saturation- Lockheed circuit 20 changes the control signal to logic "1" level, and the multiplication/ accumulation circuit 10 brings the calculation to an end. Thus, the multiplier according to the present invention speeds up the calculation.

### Second Embodiment

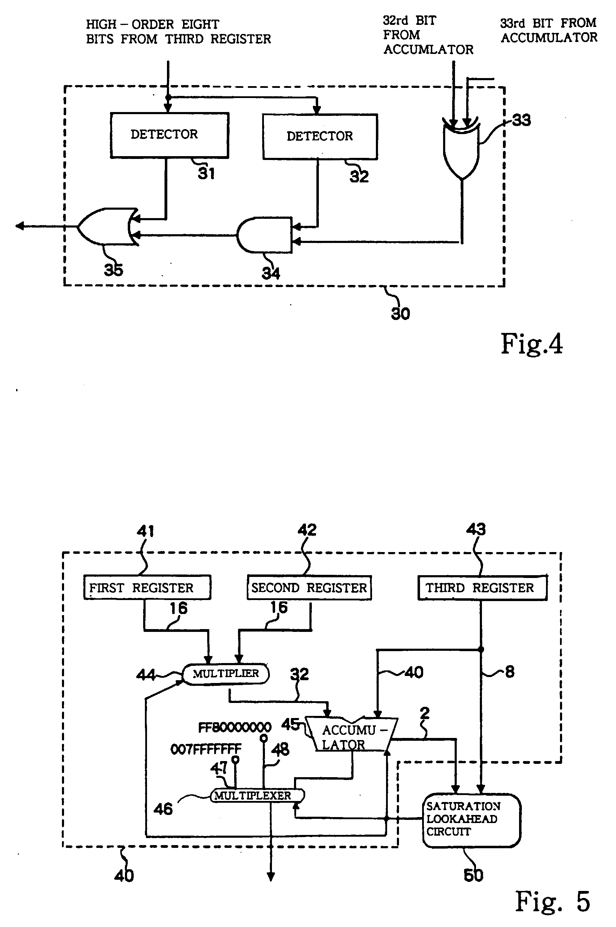

Figure 4 illustrates a saturation- Lockheed circuit 30 incorporated in another multiplier embodying the present invention. The multiplier further includes the multiplication/ accumulation circuit 10. The third register 13 and the accumulator 15 supplies the high-order eight bits of the addend and the thirty-second/ thirty-third bits of the sum/ difference to the saturation- Lockheed circuit 30, and the saturation- Lockheed circuit 30 supplies a control signal to the multiplexer 16. Only one difference from the multiplication/ accumulation circuit 10 of the first embodiment is the source of fixed value 40. In this instance, the source of fixed value 40 supplies FF80000000 to the multiplexer 16. The saturation- Lockheed circuit 30 checks the give bits to see whether or not the sum/ difference is to be less than FF80000000. When the saturation- Lockheed circuit 30 predicts that the sum/ difference is to be greater than FF80000000, the multiplexer 16 transfers the fixed value FF80000000 to the outside. On the other hand, if the sum/ difference is equal to or greater than FF80000000, the multiplexer 16 transfers the sum/ difference to the outside.

The saturation- Lockheed circuit 30 includes detectors 31/ 32, an exclusive-OR gate 33, an AND gate 34 and an OR gate 35. The high- order eight bits of the addend/ subtrahend is supplied to the detectors 31/ 32. The detector 31 checks the sing bit in the given high- order eight bits to see whether the addend/ subtrahend is a positive number or a negative number. The detector 31 further checks the remaining high- order seven bits to see whether or not at least one bit is indicative of zero. If both answers are given affirmative, the detector changes the output signal thereof to logic "1" level. However, if at least one answer is given negative, the detector 31 keeps the output signal in logic "0" level.

On the other hand, the detector 32 checks the high- order eight bits to see whether or not all the high-order bits are indicative of 1. When the answer is given affirmative, the detector 32 changes the output signal thereof to logic "1" level. However, if the answer is given negative, the detector 32 keeps the output signal in logic "0" level.

The thirty-second bit is exclusive-ORed with the thirty-third bit. The output node of the detector 32 and the output node of the exclusive-OR gate 33 are connected to the input nodes of the AND gate 34, and the output node of the AND gate 34 and the output node of the detector 31 are connected to the input nodes of the OR gate 35. The OR gate 35 changes the control signal between logic "1" level and logic "0" level.

The multiplier behaves as follows. The behavior of the multiplier 14 and the behavior of the accumulator 15 are similar to those of the first embodiment. The detector 31 changes the output signal thereof to logic "1" level under the conditions where the sign bit is indicative of a negative number and at least one high-order bit is indicative of zero, because it is predictable that the difference is less than the fixed value due to the two high-order positions of the hexadecimal number less than FF. Thus, the criteria of the saturation-Lockheed is whether or not the difference less than FF80000000 is to be predicted in the subtraction on the basis of the subtrahend stored in the third register 13. On the other hand, the detector 32 changes the output signal thereof to logic "1" under the conditions where all the high- order bits are 1.

When the thirty-second bit is different from the thirty-third bit, the exclusive- OR gate 33 changes the output signal thereof to logic "1". On the other hand, if the thirty- second bit is equal to the thirty- third bit, the exclusive-OR gate 33 keeps the output signal in logic "0" level.

The output signal of the detector 32 is ANDed with the output signal of the exclusive- OR gate 33. When the AND gate 34 changes the output signal thereof to logic "1" level, all the high- order bits arc indicative of 1, and the thirty-second bit is different from the thirty-third bit. The difference is less than FF80000000, and, accordingly, the accumulator 15 has been already saturated. In this situation, the OR gate 35 changes the control signal to logic "1" level regardless of the output signal of the detector 22.

On the other hand, the AND gate 34 keeps the output signal in logic "0" level under two different conditions. The first condition is that, although all the high- order bits are indicative of 1, the thirty-second bit is identical with the thirty-third bit, i.e., both are zero or 1. The second condition is that at least one of the high- order eight bits is indicative of zero. In this situation, the subtrahend may saturate the accumulator 15. However, the saturation is dependent on the value of the subtrahend.

The OR gate 35 keeps the control signal in logic "0" level only when both of the AND gate 34 and the detector 31 keeps the output signals in logic "0" level. However, if at least one of the output signals is logic "1" level, the OR gate 35 changes the control signal to logic "1" level.

In detail, the OR gate 35 changes the control signal to logic "1" level under the conditions where all the high-order bits are indicative of 1 and the thirty-second bit is different from the thirty-third bit. This condition is described hereinlater in detail. The OR gate 35 also changes the control signal to logic "1" level under the conditions where the sing bit is indicative of a negative number and at least one of the remaining high- order seven bits is indicative of zero. The OR gate 35 keeps the control signal in logic "0" level under the conditions where the sign bit is representative of a negative number and any logic "0" bit is not contained in the remaining high- order seven bits.

The multiplexer 16 differently behaves depending upon the logic level of the control signal. When the saturation- Lockheed circuit 30 changes the control signal to logic "1" level, the multiplexer 16 selects the source of fixed value 40, and delivers the output signal representative of FF80000000. The multiplication/ accumulation is interrupted.

On the other hand, if the saturation- Lockheed circuit 30 keeps the control signal in logic "0" level upon completion of the multiplication/ accumulation, the multiplexer 16 selects the data output port of the accumulator 15, and transfers the output signal of the accumulator 15 to the outside. If the saturation- Lockheed circuit 30 changes the control signal to logic "1" level upon completion of the multiplication/ accumulation, the multiplexer 16 selects the source of fixed value 40, and delivers the output signal representative of FF80000000.

### Third Embodiment

Figure 5 illustrates yet another multiplier embodying the present invention. The multiplier implementing the third embodiment is also broken down into a multiplication/ accumulation circuit 40 and a saturation- Lockheed circuit 50. The multiplication/ accumulation circuit 40 repeats the multiplication and the addition/ subtraction. The saturation- Lockheed circuit 50 checks the high-order eight bits of the addend/ subtrahend and the thirty- second/ thirty- third bits of the sum/ difference to see whether or not the sum/ difference are to be greater than 007FFFFFFF or less than FF80000000. When the saturation-Lockheed circuit 50 predicts that the sum/ difference is greater than 007FFFFFFF or less than FF80000000, the saturation- Lockheed circuit 50 changes the control signal to logic "1" level, and the multiplication/ accumulation circuit 40 outputs 007FFFFFFF or FF80000000 to the outside. However, if the sum/ difference is greater than FF80000000 and less than 007FFFFFFF, the saturation Lockheed circuit 50 keeps the control signal in logic "0" level, and the multiplication/ accumulation circuit 40 outputs the calculation result.

In order to realize the above-described function, the multiplication/ accumulation circuit 40 includes a first register 41, a second register 42, a third register 43, a multiplier 44, an accumulator 45, a multiplexer 46 and sources of fixed values 47/ 48. A multiplier, a multiplicand and an addend/ subtrahend are respectively stored in the first register 41, the second register 42 and the third register 43. The multiplier 44 multiplies the multiplicand by the multiplier, and supplies the product to the accumulator 45. The addend/ subtrahend is also supplied to the accumulator 45, and the accumulator 45 outputs the sum/ difference from the output data port thereof to the multiplexer 46. The sources of fixed value 47/ 48 supply 007FFFFFFF and FF80000000 to the multiplexer 46. The multiplexer 46 is responsive to the control signal so as to selectively transfer the sum/ difference, 007FFFFFFF and FF80000000 to the outside.

Figure 6 illustrates the saturation- Lockheed circuit 50. The saturation-Lockheed circuit 50 is equivalent to the combination of the saturation- Lockheed circuits 20/ 30, and supplies the 2- bit control signal. The two bits are respectively produced by the saturation- Lockheed circuits 20/ 30. The saturation- Lockheed circuits 20/ 30 process the high- order eight bits of the addend/ subtrahend and the thirty-second bit/ thirty-third bit of the sum/ difference in parallel. For this reason, no further description is incorporated hereinbelow for the sake of simplicity.

When the control signal is 01, the multiplexer 46 selects the fixed value 007FFFFFFF. If the control signal is 10, the multiplexer selects the fixed value FF80000000. When the control signal is 00, the multiplexer selects the sum/ difference.

As will be appreciated from the foregoing description, the saturation-Lockheed circuit checks the particular bits of the addend/ subtrahend and the particular bits of the sum/ difference to see whether or not the saturation is predicted, and brings the calculation to an end under the condition that the saturation is predicted. This results in speed-up of the multiplier.

Although particular embodiments of the present invention have been shown and described, it will be apparent to those skilled in the art that various changes and modifications may be made without departing from the spirit and scope of the present invention.

For example, the hexadecimal number 007FFFFFFF and/ or FF80000000 are only examples of the fixed values. Another multiplier may have a source or sources of fixed value different from those hexadecimal numbers.

## Claims

1. A calculation circuit for calculating a result, comprising:
a calculating section (15; 45) having plural data input nodes and at least one data output node, and carrying out a calculation on numbers at said plural data input ports for supplying a result to said data output port;
a first source (11/ 12/ 13/ 14; 41/ 42/ 43/ 44 ) of number connected to said plural data input nodes for supplying said numbers to said plural data input nodes;
a second source (40; 47/ 48) of number for producing a fixed number;
a controller producing a control signal; and
a multiplexing section (16; 46) having data input ports respectively connected to said second source of number and said data output port of said calculating section and responsive to said control signal so as to selectively connect said data output port and said second source of number to a data output port thereof,
characterized in that
said controller is implemented by a saturation- Lockheed circuit (20; 30; 50) having data input ports respectively connected to said first source of number and said data output port of said calculating sect ion, checking said result and at least one of said numbers to see whether or not saturated state is predicted in said calculating section, and changing said control signal between a first state representative of the prediction of said saturated state and a second state representative of the prediction of unsaturated state.

2. The calculating circuit as set forth in claim 1, in which said calculation is brought to an end when said saturation- Lockheed circuit (20; 30; 50) predicts said saturated state.

3. The calculating circuit as set forth in claim 1, in which said first source of number includes
a multiplier (14; 44) operative to multiplying a multiplicand by a multiplier for producing one of said numbers representative of the product between said multiplicand and said multiplier and supplying said one of said numbers to said calculating section as an augend or a minuend, and
a register (13; 43) storing another of said numbers representative of an addend or a subtrahend and supplying said another of said numbers to said calculating section.

4. The calculating circuit as set forth in claim 3, in which said multiplicand and said multiplier are respectively stored in another register (11; 41) and yet another register (12; 42) both connected to said multiplier.

5. The calculating circuit as set forth in claim 3, in which said register (13; 43) and said calculating section (15; 45) respectively supply a first part of a first bit string representative of said addend or said subtrahend and a second part of a second bit string representative of a sum or a difference produced at said data output port thereof to said saturation- Lockheed circuit.

6. The calculating circuit as set forth in claim 5, in which said calculating section (15) enters said saturated state when said sum is greater than a predetermined value (007FFFFFFF).

7. The calculating circuit as set forth in claim 6, in which said saturation-Lockheed circuit predicts said saturated state under the conditions
that a sign bit of said first part and at least one bit of the remaining bits of said first part are representative of a plus sign and logic "1" level, respectively, or
that all bits of said first part and predetermined two bits of said second part are in logic "0" level and different from each other, respectively.

8. The calculating circuit as set forth in claim 7, in which said saturation-Lockheed circuit includes
a first detector (21) changing a first output signal thereof to logic "1" level when said sign bit of said first part and said at least one bit of said remaining bits are representative of said plus sign and logic "1" level, respectively,
a second detector (22) changing a second output signal thereof to logic "1" level when said all bits of said first part are in logic "0" level,
an exclusive- OR gate (23) having input nodes supplied with said predetermined two bits and producing a third output signal,
an AND gate (24) supplied with said second output signal and said third output signal for producing a fourth output signal, and
an OR gate (25) supplied with said first output signal and said fourth output signal for producing said control signal.

9. The calculating circuit as set forth in claim 5, in which said calculating section enters said saturated state when said difference is less than a predetermined value (FF80000000).

10. The calculating circuit as set forth in claim 10, in which said saturation-Lockheed circuit (30) predicts said saturated state under the conditions
that a sign bit of said first part and at least one bit of the remaining bits of said first part are representative of a minus sign and logic "0" level, respectively, or
that all bits of said first part and predetermined two bits of said second part are in logic "1" level and different from each other, respectively.

11. The calculating circuit as set forth in claim 10, in which said saturation-Lockheed circuit (30) includes
a first detector (31) changing a first output signal thereof to logic "1" level when said sign bit of said first part and said at least one bit of said remaining bits are representative of said minus sign and logic "0" level, respectively,
a second detector (32) changing a second output signal thereof to logic "1" level when said all bits of said first part are in logic "1" level,
an exclusive- OR gate (33) having input nodes supplied with said predetermined two bits and producing a third output signal,
an AND gate (34) supplied with said second output signal and said third output signal for producing a fourth output signal, and
an OR gate (35) supplied with said first output signal and said fourth output signal for producing said control signal.

12. The calculating circuit as set forth in claim 5, in which said calculating section (45) enters said saturated state when said result is greater than a first predetermined number or less than a second predetermined number.

13. The calculating circuit as set forth in claim 12, in which said saturation-Lockheed circuit (50) predicts said saturated state under the conditions
that a sign bit of said first part and at least one bit of the remaining bits of said first part are representative of a plus sign and logic "1" level, respectively,
that all bits of said first part and said predetermined two bits of said second part are in logic "0" level and different from each other, respectively,
that said sign bit of said first part and said at least one bit of said remaining bits are representative of a minus sign and logic "0" level, respectively, or
that said all bits of said first part and said predetermined two bits of said second part are in logic "1" level and different from each other, respectively.
